# EUROPEAN PATENT SPECIFICATION

(11) **EP 4 006 105 B1**
(45) Date of publication and mention of the grant of the patent: **04.11.2026**
(21) Application number: 20906137.3
(22) Date of filing: 15.09.2020
(51) Int. Cl.: C08L 69/00, C08L 55/02, C08L 51/06, C08L 51/04, C08L 23/08

(54) **POLYCARBONATE/ABS COMPOSITION, PREPARATION METHOD THEREFOR AND AUTOMOBILE PILLAR PROTECTIVE PANEL**
POLYCARBONAT-/ABS-ZUSAMMENSETZUNG, VERFAHREN ZU IHRER HERSTELLUNG UND SCHUTZTAFEL FÜR KRAFTFAHRZEUGSÄULE
COMPOSITION DE POLYCARBONATE/ABS, SON PROCÉDÉ DE PRÉPARATION ET PANNEAU DE PROTECTION DE MONTANT D'AUTOMOBILE

(30) Priority: 26.12.2019 CN 201911369322
(43) Date of publication of application: 01.06.2022
(73) Proprietor: Shanghai Zhonglei New Material Science Co., Ltd., Shanghai 201306 (CN)
(72) Inventor: LIU, Chunyan, Shanghai 201306 (CN); BAI, Meirong, Shanghai 201306 (CN)
(74) Representative: Cabinet Didier Martin
(86) International application number: PCT/CN2020/115201
(87) International publication number: WO 2021/128965

(56) References cited:
- EP-A1- 2 594 608
- CN-A- 101 045 812
- CN-A- 101 045 812
- CN-A- 102 399 424
- CN-A- 102 399 424
- CN-A- 102 417 699
- CN-A- 102 719 077
- CN-A- 102 719 077
- CN-A- 102 719 077
- CN-A- 103 554 865
- CN-A- 103 554 865
- CN-A- 110 982 240
- US-A1- 2013 079 443
- US-A1- 2015 353 732
- US-A1- 2015 353 732

## Description

### TECHNICAL FIELD

The present application belongs to the field of macromolecule materials, and relates to a polycarbonate/ABS composition, a preparation method therefor and an automobile pillar protective panel.

### BACKGROUND

The composition of polycarbonate (PC) and acrylonitrile butadiene styrene copolymer (ABS) combines the excellent characteristics of the two materials, that is, the advantages of impact resistance, low-temperature resistance, chemical resistance, ease of processability, and dimensional stability of the ABS material, and the properties of heat resistance, impact resistance, ultraviolet (UV) resistance, and good mechanical performance of the PC material, and thus can be widely used in automobile interior and exterior trims.

With the development of the automobile industry, there are increasing requirements for the safety of automobile interior trim. The A-pillar of the automobile refers to the pillar between the windshield and the front door and plays a role of buffer protection when traffic accidents occur. Since automobiles are driven in different temperature environments due to the temperature change throughout the year, the materials used as pillar protective panels need to meet the requirements of high toughness at high and low temperatures, so that the airbags in the pillar protective panels can be deployed smoothly in case of an accidental crash.

Although the PC/ABS alloy has good impact toughness at room temperature, at low temperature, the movement of molecular chains in the polymer material becomes slow, and the overall strength of the material increases while the toughness decreases. This change will make the material more brittle, and the material may easily be broken or even splashed when impacted. The material of automobile pillar protective panels not only needs to meet the toughness at room and high temperatures, but also needs to meet the high low-temperature toughness.

CN105315638A discloses a polycarbonate/ABS composition, an alloy, and a preparation method thereof, which mainly solves the problem that the impact performance and the heat resistance of the polycarbonate/ABS alloy cannot be balanced due to the use of the compatibilizer therein in the prior art. The polycarbonate/ABS composition includes the following components in parts by weight: a) 50 to 99 parts of polycarbonate with a weight average molecular weight of (2 to 8) × 10⁴ g/mol; b) 1 to 50 parts of bulk ABS, in which, based on the percentage by weight, the content of N-phenylmaleimide is 1% to 10%, the content of rubber is 5% to 20%, and the volume average particle diameter is 1 µmm to 10 µmm; and c) 0.01 to 1 part of antioxidant, and the polycarbonate/ABS composition is prepared by using the above materials through blending and extrusion. The problem is well solved through this technical solution, and such a composition can be used in the industrial production of polycarbonate/ABS alloy for automobiles and household appliances.

CN102746632A discloses a polycarbonate/ABS resin plastic alloy to mainly solve the problem of low impact strength of polycarbonate/ABS plastic alloys prepared through previous technologies. The problem in this invention is well solved through adopting a technical solution that the plastic alloy is composed of a polycarbonate resin, a bulk polymerization ABS resin, a compatilizer SMA resin, and auxiliary agents of an antioxidant and the like. The polycarbonate/ABS plastic alloy can be applied to the production of various plastic products needing high impact strength, such as automobile bumpers, dashboards and the like.

CN105462224A discloses a stress-cracking-resistant polycarbonate composite material and a preparation method thereof. The composite material includes the following components in parts by weight: 30 to 80 parts of polycarbonate, 1 to 50 parts of ABS polymer, 0 to 50 parts of crystalline polyester PBT and/or crystalline polyester PET, 0.1 to 10 parts of TPP, 0.1 to 10 parts of methyl MBS and 0.1 to 15 parts of BDP and/or RDP, where the sum of the weight percentages of the above components is 100 wt%. By adopting the specific-structure polycarbonate and ABS polymer and adding the specific-content TPP into the composite material, the comprehensive properties of the composite material are improved, so that the composite material has good stress cracking resistance and processability and is especially suitable for occasions with high requirements for indoor and outdoor operating environments. CN 102 719 077 A discloses polycarbonate/ acrylonitrile butadiene styrene (ABS) compositions, comprising polycarbonate 60 parts, ABS 35 parts, a compatibilizer 2 parts, a toughening agent (5 parts), a ultraviolet absorber (Tinuvin 327) 0,3 parts, a light stabilizer (HALS Tinuvin 770) 0,3 parts, an antioxidant (inhibitor 245) 0,1 parts, a lubricant (PETS) 0,5 parts. The compatibilizer is acrylonitrile-styrene copolymer grafted maleic anhydride (AS-g-MAH), acrylonitrile-styrene copolymer grafted glycidyl methacrylate (AS-g- GMA) or polymethyl methacrylate grafted with maleic anhydride (PMMA-g-MAH). Applications as automobile parts are disclosed.

Therefore, developing a new polycarbonate/ABS is of great significance to the performance requirements of the material of automobile pillar protective panels.

### SUMMARY

The object of the present application is to provide a polycarbonate/ABS composition, a preparation method therefor and an automobile pillar protective panel to solve the problem of poor low-temperature toughness of the polycarbonate/ABS material.

To achieve this object, the present application adopts the technical solutions described below.

In a first aspect, the present application provides a polycarbonate/ABS composition according to claim 1. Based on the total weight of the composition taken as 100 parts, the composition comprises the following components:

| | |
|---|---|
| polycarbonate | 50 to 80 parts |
| ABS | 10 to 40 parts |
| compatibilizer | 1 to 10 parts |
| toughening agent | 1 to 10 parts |
| antioxidant | 0.1 to 1 part |
| light stabilizer | 0.1 to 1 part |
| ultraviolet absorber | 0.1 to 1 part |
| heat stabilizer | 0.1 to 1 part |
| lubricant | 0.1 to 1 part, |

wherein the compatibilizer is ethylene-propylene-octylene maleic anhydride copolymer, and
the impact strength of the polycarbonate/acrylonitrile butadiene styrene (ABS) composition is greater than or equal to 62 kJ/m2, said impact strength being measured according to Charpy notch impact test standard DIN EN ISO 179-1/1eA with a spline 20 size of 80*10*4, a notch type of Class A, a pendulum of 4 J, and a testing temperature of -35°C.

For the polycarbonate/ABS composition provided by the present application, with the selection of the mutual cooperation of each component, the composition has the characteristics of high flow and high toughness and is easy to fill and form a large-size mould. Meanwhile, on the basis of not affecting any other properties, the composition also shows excellent notch impact performance at room and low temperatures, in which the notch impact strength at room temperature is improved by greater than or equal to 2 times and the notch impact strength at low temperature is improved by greater than or equal to 4.5 times, and the composition has weatherability and long-term aging resistance. Therefore, the composition has a good application prospect in automobile pillar protective panels and other fields.

In the present application, the polycarbonate is in an amount of 50 to 80 parts by weight, for example, 50 parts, 55 parts, 60 parts, 65 parts, 70 parts, 75 parts or 80 parts, etc.

Optionally, the polycarbonate is an aromatic polycarbonate. The abbreviation of the polycarbonate in the present application may be written as PC.

Optionally, the weight average molecular weight of the polycarbonate is 15000 g/mol to 40000 g/mol, for example, 15000 g/mol, 17000 g/mol, 19000 g/mol, 21000 g/mol, 25000 g/mol, 28000 g/mol, 30000 g/mol, 31000 g/mol, 35000 g/mol or 40000 g/mol, etc.

In the present application, the ABS refers to the ABS plastic, which is a terpolymer of acrylonitrile, butadiene, and styrene. The ABS is in an amount of 10-40 parts by weight, for example, 10 parts, 15 parts, 20 parts, 25 parts, 28 parts, 30 parts, 33 parts, 35 parts, 38 parts or 40 parts, etc.

Optionally, the weight average molecular weight of the ABS is 100000 g/mol to 200000 g/mol, for example, 100000 g/mol, 110000 g/mol, 120000 g/mol, 130000 g/mol, 140000 g/mol, 150000 g/mol, 160000 g/mol, 170000 g/mol, 180000 g/mol, 190000 g/mol or 200000 g/mol, etc.

In the present application, the molecular weight of the polycarbonate and the ABS mainly affects the processing fluidity, impact performance, thermal performance and the like of the composition. The higher the molecular weight, the worse the processability, and the better the impact performance and heat resistance. In the present application, the selection of the polycarbonate and the ABS within the molecular weight ranges can ensure good processability, excellent impact performance, and great heat resistance.

Optionally, based on the total weight of the ABS taken as 100%, the ABS includes the following components, in percentage by mass: 30% to 50% of styrene, 30% to 70% of butadiene, and 10% to 40% of acrylonitrile.

In the present application, the compatibilizer is in an amount of 1 to 10 parts by weight, for example, 1 part, 2 parts, 3 parts, 4 parts, 5 parts, 6 parts, 7 parts, 8 parts, 9 parts or 10 parts, etc.

In the present application, the polycarbonate/ABS composition includes 1 to 10 parts of a toughening agent, for example, 1 part, 2 parts, 3 parts, 4 parts, 5 parts, 6 parts, 7 parts, 8 parts, 9 parts or 10 parts, etc.

Optionally, the toughening agent is olefin block copolymer, methyl methacrylate/butadiene/styrene copolymer, methyl methacrylate/acrylic polymer, acrylic toughening agent, acrylic-silicone rubber toughening agent, ethylene-methyl acrylate, ethylene-butyl acrylate, ethylene-acrylate-glycidyl methacrylate terpolymer or ethylene-vinyl acetate copolymer-functionalized maleic anhydride.

In the present application, the toughening agent and the compatibilizer have a synergistic effect, the two mutually promote the toughness of the composition, and the impact strength of the composition also increases with an increase in the amount of the toughening agent added.

In the present application, the polycarbonate/ABS composition includes 0.1 to 1 part of an antioxidant, for example, 0.1 part, 0.2 part, 0.3 part, 0.4 part, 0.5 part, 0.6 part, 0.7 part, 0.8 part, 0.9 part or 1 part, etc.

Optionally, the antioxidant is any one or a combination of two or more of tris(2,4-di-tert-butylphenyl)phosphite, pentaerythritol tetrakis[β-(3,5-di-tert-butyl-4-hydroxyphenyl)propionate], *N,N'*-bis[β-(3,5-di-tert-butyl-4-hydroxyphenyl)propionyl] hexamethylenediamine, bis(2,4-di-tert-butylphenyl)pentaerythritol diphosphite, n-octadecyl-β-(3,5-di-tert-butyl-4-hydroxyphenyl)propionate, tris(2,4-di-tert-butyl)phosphite, hindered phenol octadecyl-(3,5-dibutyl-4-hydroxy-phenyl)propionate, 1,3,5-tris(3,5-di-tert-butyl,4-hydroxybenzyl)-s-triazine, 2,4,6-(1*H*,3*H*,5*H*)-trione, *N,N'*-bis(3-(3,5-di-tert-butyl-4-hydroxyphenyl)propionyl) hexamethylenediamine, triethylene glycol bis[β-(3-tert-butyl-4-hydroxy-5-methylphenyl)propionate], or distearyl pentaerythritol diphosphate.

In the present application, the polycarbonate/ABS composition includes 0.1 to 1 part of a light stabilizer, for example, 0.1 part, 0.2 part, 0.3 part, 0.4 part, 0.5 part, 0.6 part, 0.7 part, 0.8 part, 0.9 part, 1 part, etc.

Optionally, the light stabilizer is any one or a combination of two or more of 4-benzoyloxy-2,2,6,6-tetramethylpiperidine, bis(1,2,2,6,6-pentamethyl-4-piperidinyl)sebacate, 2,2,6,6-tetra-methylpiperidine benzoate, a polymer of butanedioic acid and 4-hydroxy-2,2,6,6-tetramethyl-1-piperidineethanol, bis(2,2,6,6-tetramethyl-4-piperidinyl) sebacate, or poly{[6-[(1,1,3,3-tetramethylbutyl)imino]-1,3,5-triazin-2,4-diyl][2-(2,2,6,6-tetramethylpiperidinyl)-nitrilo]-hexamethylene-[4-(2,2,6,6-tetramethylpiperidinyl)-nitrilo].

In the present application, the polycarbonate/ABS composition includes 0.1 to 1 part of an ultraviolet absorber, for example, 0.1 part, 0.2 part, 0.3 part, 0.4 part, 0.5 part, 0.6 part, 0.7 part, 0.8 part, 0.9 part or 1 part, etc.

Optionally, the ultraviolet absorber is any one or a combination of more than two of 2,4-dihydroxybenzophenone, 2-hydroxy-4-methoxybenzophenone, 2-hydroxy-4-n-octyloxybenzophenone, 2-(2-hydroxy-5-methyl-phenyl)benzotriazole, 2-(2'-hydroxy-3',5'-bis(α,α-dimethylbenzyl)phenyl)benzotriazole, 2-(2-hydroxy-3-tert-butyl-5-methylphenyl)-5-chlorobenzotriazole, 2-(2'-hydroxy-3',5'-di-tert-phenyl)-5-chlorobenzotriazole, 2-(2-hydroxy-3,5-di-tert-pentylphenyl)benzotriazole, 2-(2'-hydroxy-4'-benzoyloxyphenyl)-5-chloro-2H-benzotriazole, resorcinol monobenzoate, 2-(4,6-bis(2,4-dimethylphenyl)-1,3,5-triazin-2-yl)-5-octyloxyphenol, 2,4,6-tris(2'-butoxyphenyl)-1,3,5-triazine, 2-(4,6-diphenyl-1,3,5-triazin-2)-5-n-hexyloxyphenol, phenyl salicylate, salicylic acid-4-isopropylbenzyl ester, 2-ethylhexyl salicylate, or hexamethylphosphoric triamide.

In the present application, the polycarbonate/ABS composition includes 0.1 to 1 part of a heat stabilizer, for example, 0.1 part, 0.2 part, 0.3 part, 0.4 part, 0.5 part, 0.6 part, 0.7 part, 0.8 part, 0.9 part or 1 part, etc.

Optionally, the heat stabilizer is any one or a combination of two or more of a metal soap, an organotin compound, a phosphite, or a phosphate.

In the present application, the polycarbonate/ABS composition includes 0.1 to 1 part of a lubricant, for example, 0.1 part, 0.2 part, 0.3 part, 0.4 part, 0.5 part, 0.6 part, 0.7 part, 0.8 part, 0.9 part or 1 part, etc.

Optionally, the lubricant is any one or a combination of two or more of silane polymer, fatty acid salt, calcium stearate, zinc stearate, stearamide, methylene bis stearamide, ethylene bis oleamide, N,N-ethylene-bis-stearamide, glycerol monostearate, pentaerythritol stearate, or a montan wax.

In a second aspect, the present application provides a preparation method of the polycarbonate/ABS composition described in the first aspect. The preparation method includes the following steps:
(1) mixing a polycarbonate and ABS as well as a compatibilizer, a toughening agent, an antioxidant, a light stabilizer, an ultraviolet absorber, a heat stabilizer, and a lubricant to obtain a mixture; and
(2) blending and pelletizing the mixture obtained in step (1) by a twin-screw extruder, and performing melt extrusion to obtain the polycarbonate/ABS composition.

Optionally, the rotational speed of the twin-screw extruder in step (2) is 300 rpm/min to 1000 rpm/min, for example, 300 rpm/min, 350 rpm/min, 400 rpm/min, 450 rpm/min, 500 rpm/min, 550 rpm/min, 600 rpm/min, 650 rpm/min, 700 rpm/min, 750 rpm/min, 800 rpm/min, 850 rpm/min, 900 rpm/min, 950 rpm/min or 1000 rpm/min, etc.

Optionally, the melt extrusion temperature of the twin-screw extruder in step (2) is 210°C to 280°C, for example, 210°C, 220°C, 230°C, 240°C, 250°C, 260°C, 270°C or 280°C, etc.

In a third aspect, the present application provides an automobile pillar protective panel. The automobile pillar protective panel includes the polycarbonate/ABS composition described in the first aspect.

Because of different automobile types, the types and interior distribution of automobile pillar protective panels are different. Generally, a sedan includes A-pillar upper protective panels, B-pillar upper protective panels, C-pillar upper protective panels, and D-pillar protective panels. Pillar protective panels can increase passenger comfort and provide an elegant interior appearance. In particular, the A-pillar protective panels are equipped with airbags inside. When the vehicle body is crashed, the airbags rush out of the A-pillar protective panels and inflate to protect the personal safety of passengers. Therefore, the materials used as pillar protective panels need to have certain toughness and rigidity. Also, since the external environment for the automobiles is different, the materials of the pillar protective panels of automobiles need to maintain good performance under different temperatures and humidity.

The polycarbonate/ABS composition with high flow and high low-temperature toughness described in the present application can completely meet the performance requirements of materials of automobile pillar protective panels. This type of material can not only be used in automobile pillar protective panels, but also in automobile interior and exterior trims such as spoilers, door panels, primary and secondary dashboards, pillars, skeletons, etc., all of which have a good performance.

Compared with the prior art, the present application has the beneficial effects described below.

For the polycarbonate/ABS composition provided by the present application, with the selection of the suitable compatibilizer and toughening agent, the composition has the characteristics of high flow and high toughness. Meanwhile, on the basis of not affecting any other properties, the composition also shows excellent notch impact performance at room and low temperatures, in which the notch impact strength at room temperature is improved by greater than or equal to 1 time and the notch impact strength at low temperature is improved by greater than or equal to 1.5 times. The composition can easily fill and form a large-size mould. Therefore, the composition is very suitable for preparing automobile pillar protective panels and has a good application prospect and high application value.

### DETAILED DESCRIPTION

The technical solutions of the present application are further described below through the detailed description. Those skilled in the art are to understand that examples described herein are merely used for a better understanding of the present application and are not to be construed as specific limitations to the present application.

The raw materials used in the following examples of the present application are as follows:
Polycarbonate: produced by Dow Chemical Company of the United States, brand Calibre201-10, with a weight average molecular weight of about 27000; ABS: produced by Daqing Petrochemical Company, brand 750A; ABS-g-MAH (acrylonitrile butadiene styrene copolymer grafted with maleic anhydride): model German ALMAAK/R500.

Compatibilizer:
1) ethylene-propylene-octylene maleic anhydride copolymer (ethylene:propylene:octylene = 87:6:7), CAS No.: 31069-12-2, with a molecular weight (MW) of 5000 g/mol, a density of 940 kg/m³, an acid number of 60 mg KOH/g, and maleic anhydride content of 4.4% based on the content of the copolymer;
2) ethylene copolymer grafted with maleic anhydride, produced by Guangzhou Chuanju Chemical Technology Co., Ltd.;
3) polypropylene grafted with maleic anhydride, with a grafting ratio of 1.2%, produced by Ziheng Plastic Factory.

Toughening agent:
1) INFUSE^{™} OBC toughening agent produced by Dow Chemical Company;
2) methyl methacrylate/butadiene/styrene copolymer (MBS), produced by U.S. Rohm and Haas, EXL-2620;
3) ethylene-methyl acrylate copolymer (EMA), produced by U.S. DuPont, HP4051.

Antioxidant: a hindered phenol antioxidant, antioxidant 1010 produced by Double Bond Chemical Ind. Co., Ltd.

Light stabilizer: hindered amine light stabilizer 770, produced by Dongguan Lvwei Plastic Products Co., Ltd.

Ultraviolet absorber: ultraviolet absorber Tinuvin 326 produced by BASF.

Heat stabilizer: a phosphite stabilizer, Irganox^{®} B900 (a mixture of 80% of Irgafos^{®} 168 and 20% of Irganox^{®} 1076.

Lubricant: silicone powder YY-GT100, produced by Guangzhou Youyou Chemical Technology Co., Ltd.

### Example 1

This example provides a polycarbonate/ABS composition. The polycarbonate/ABS composition includes the following components in parts by weight:

| | |
|---|---|
| polycarbonate | 50 parts |
| ABS | 39.5 parts |
| ethylene-propylene-octylene maleic anhydride copolymer | 5 parts |
| OBC toughening agent | 5 parts |
| antioxidant | 0.1 part |
| light stabilizer | 0.1 part |
| ultraviolet absorber | 0.1 part |
| heat stabilizer | 0.1 part |
| lubricant | 0.1 part. |

The preparation method is as follows:
(1) The polycarbonate, ABS resin, ethylene-propylene-octylene maleic anhydride copolymer, OBC toughening agent, antioxidant, light stabilizer, ultraviolet absorber, heat stabilizer, and lubricant were blended to uniform in a mixer to obtain pre-mixture.
(2) The obtained mixture was fed into a twin-screw extruder for melt mixing, extruded and pelletized to obtain the polycarbonate/ABS composition, where the melting temperature of the twin-screw extruder was 250°C, and the rotational speed was 600 rpm/min.

### Example 2

This example provides a polycarbonate/ABS composition. The polycarbonate/ABS composition includes the following components in parts by weight:

| | |
|---|---|
| polycarbonate | 50 parts |
| ABS | 29.5 parts |
| ethylene-propylene-octylene maleic anhydride copolymer | 10 parts |
| OBC toughening agent | 10 parts |
| antioxidant | 0.1 part |
| light stabilizer | 0.1 part |
| ultraviolet absorber | 0.1 part |
| heat stabilizer | 0.1 part |
| lubricant | 0.1 part. |

The preparation method is as follows:
(1) The polycarbonate, ABS resin, ethylene-propylene-octylene maleic anhydride copolymer, OBC toughening agent, antioxidant, light stabilizer, ultraviolet absorber, heat stabilizer, and lubricant were blended to uniform in a mixer to obtain pre-mixture.
(2) The obtained mixture was fed into a twin-screw extruder for melt mixing, extruded and pelletized to obtain the polycarbonate/ABS composition, where the melting temperature of the twin-screw extruder was 210°C, and the rotational speed was 400 rpm/min.

### Comparative example 3

This example provides a polycarbonate/ABS composition. The polycarbonate/ABS composition includes the following components in parts by weight:

| | |
|---|---|
| polycarbonate | 50 parts |
| ABS | 39.5 parts |
| ethylene-propylene-octylene maleic anhydride copolymer | 10 parts |
| antioxidant | 0.1 part |
| light stabilizer | 0.1 part |
| ultraviolet absorber | 0.1 part |
| heat stabilizer | 0.1 part |
| lubricant | 0.1 part. |

The preparation method is as follows:
(1) The polycarbonate, ABS resin, ethylene-propylene-octylene maleic anhydride copolymer, antioxidant, light stabilizer, ultraviolet absorber, heat stabilizer, and lubricant were blended to uniform in a mixer to obtain pre-mixture.
(2) The obtained mixture was fed into a twin-screw extruder for melt mixing, extruded and pelletized to obtain the polycarbonate/ABS composition, where the melting temperature of the twin-screw extruder was 280°C, and the rotational speed was 700 rpm/min.

### Comparative example 4

This example provides a polycarbonate/ABS composition. The polycarbonate/ABS composition includes the following components in parts by weight:

| | |
|---|---|
| polycarbonate | 50 parts |
| ABS | 39.5 parts |
| OBC toughening agent | 10 parts |
| antioxidant | 0.1 part |
| light stabilizer | 0.1 part |
| ultraviolet absorber | 0.1 part |
| heat stabilizer | 0.1 part |
| lubricant | 0.1 part. |

The preparation method is as follows:
(1) The polycarbonate, ABS resin, OBC toughening agent, antioxidant, light stabilizer, ultraviolet absorber, heat stabilizer, and lubricant were blended to uniform in a mixer to obtain pre-mixture.
(2) The obtained mixture was fed into a twin-screw extruder for melt mixing, extruded and pelletized to obtain the polycarbonate/ABS composition, where the melting temperature of the twin-screw extruder was 230°C, and the rotational speed was 300 rpm/min.

### Comparative example 5

This example provides a polycarbonate/ABS composition. The polycarbonate/ABS composition includes the following components in parts by weight:

| | |
|---|---|
| polycarbonate | 60 parts |
| ABS | 29.5 parts |
| ethylene copolymer grafted with maleic anhydride | 5 parts |
| MBS toughening agent | 5 parts |
| antioxidant | 0.1 part |
| light stabilizer | 0.1 part |
| ultraviolet absorber | 0.1 part |
| heat stabilizer | 0.1 part |
| lubricant | 0.1 part. |

The preparation method is as follows:
(1) The polycarbonate, ABS resin, ethylene copolymer grafted with maleic anhydride, MBS toughening agent, antioxidant, light stabilizer, ultraviolet absorber, heat stabilizer, and lubricant were blended to uniform in a mixer to obtain pre-mixture.
(2) The obtained mixture was fed into a twin-screw extruder for melt mixing, extruded and pelletized to obtain the polycarbonate/ABS composition, where the melting temperature of the twin-screw extruder was 240°C, and the rotational speed was 800 rpm/min.

### Example 6

This example provides a polycarbonate/ABS composition. The polycarbonate/ABS composition includes the following components in parts by weight:

| | |
|---|---|
| polycarbonate | 60 parts |
| ABS | 19.5 parts |
| ethylene-propylene-octylene maleic anhydride copolymer | 5 parts |
| maleic anhydride grafted polypropylene | 5 parts |
| OBC toughening agent | 5 parts |
| EMA toughening agent | 5 parts |
| antioxidant | 0.1 part |
| light stabilizer | 0.1 part |
| ultraviolet absorber | 0.1 part |
| heat stabilizer | 0.1 part |
| lubricant | 0.1 part. |

The preparation method is as follows:
(1) The polycarbonate, ABS resin, ethylene-propylene-octylene maleic anhydride copolymer, maleic anhydride grafted polypropylene, OBC toughening agent, EMA toughening agent, antioxidant, light stabilizer, ultraviolet absorber, heat stabilizer, and lubricant were blended to uniform in a mixer to obtain pre-mixture.
(2) The obtained mixture was fed into a twin-screw extruder for melt mixing, extruded and pelletized to obtain the polycarbonate/ABS composition, where the melting temperature of the twin-screw extruder was 260°C, and the rotational speed was 900 rpm/min.

### Example 7

This example provides a polycarbonate/ABS composition. The polycarbonate/ABS composition includes the following components in parts by weight:

| | |
|---|---|
| polycarbonate | 80 parts |
| ABS | 10 parts |
| ethylene-propylene-octylene maleic anhydride copolymer | 5 parts |
| OBC toughening agent | 4.5 parts |
| antioxidant | 0.1 part |
| light stabilizer | 0.1 part |
| ultraviolet absorber | 0.1 part |
| heat stabilizer | 0.1 part |
| lubricant | 0.1 part. |

The preparation method is as follows:
(1) The polycarbonate, ABS resin, ethylene-propylene-octyl maleic anhydride copolymer, OBC toughening agent, antioxidant, light stabilizer, ultraviolet absorber, heat stabilizer, and lubricant were blended to uniform in a mixer to obtain pre-mixture.
(2) The obtained mixture was fed into a twin-screw extruder for melt mixing, extruded and pelletized to obtain the polycarbonate/ABS composition, where the melting temperature of the twin-screw extruder was 270°C, and the rotational speed was 1000 rpm/min.

### Comparative example 8

This example provides a polycarbonate/ABS composition. The polycarbonate/ABS composition includes the following components in parts by weight:

| | |
|---|---|
| polycarbonate | 69.5 parts |
| ABS | 10 parts |
| ethylene copolymer grafted with maleic anhydride | 5 parts |
| maleic anhydride grafted polypropylene | 5 parts |
| MBS toughening agent | 5 parts |
| EMA toughening agent | 5 parts |
| antioxidant | 0.1 part |
| light stabilizer | 0.1 part |
| ultraviolet absorber | 0.1 part |
| heat stabilizer | 0.1 part |
| lubricant | 0.1 part. |

The preparation method is as follows:
(1) The polycarbonate, ABS resin, ethylene copolymer grafted with maleic anhydride, maleic anhydride grafted polypropylene, MBS toughening agent, EMA toughening agent, antioxidant, light stabilizer, ultraviolet absorber, heat stabilizer, and lubricant were blended to uniform in a mixer to obtain pre-mixture.
(2) The obtained mixture was fed into a twin-screw extruder for melt mixing, extruded and pelletized to obtain the polycarbonate/ABS composition, where the melting temperature of the twin-screw extruder was 220°C, and the rotational speed was 500 rpm/min.

### Comparative Example 1

The polycarbonate/ABS composition in this comparative example includes the following components in parts by weight:

| | |
|---|---|
| polycarbonate | 69.5 parts |
| ABS | 10 parts |
| ABS-g-MAH | 5 parts |
| antioxidant | 0.1 part |
| light stabilizer | 0.1 part |
| ultraviolet absorber | 0.1 part |
| heat stabilizer | 0.1 part |
| lubricant | 0.1 part. |

The preparation method is as follows:
(1) The polycarbonate, ABS resin, ABS-g-MAH, antioxidant, light stabilizer, ultraviolet absorber, heat stabilizer, and lubricant were blended to uniform in a mixer to obtain pre-mixture.
(2) The obtained mixture was fed into a twin-screw extruder for melt mixing, extruded and pelletized to obtain the polycarbonate/ABS composition, where the melting temperature of the twin-screw extruder was 255°C, and the rotational speed was 550 rpm/min.

### Performance Test

The obtained polycarbonate/ABS compositions were tested for flexural strength and impact strength. The flexural strength test was performed according to DIN EN ISO 178 with a spline size of 50*6*4 mm, a span of 40 mm, a testing speed of 14 mm/min, and a temperature of 23°C. The impact strength test was performed according to Charpy notch impact test standard DIN EN ISO 179-1/1eA with a spline size of 80* 10*4, a notch type of Class A, and a pendulum of 4J, and testing temperatures of 23°C and -35°C respectively. The test results are shown in Table 1 below.

**Table 1**

| Sample | Flexural strength (23°C, MPa) | Impact strength (23°C, KJ/m²) | Impact strength (-35°C, KJ/m²) |
|---|---|---|---|
| Example 1 | 93 | 85 | 76 |
| Example 2 | 93 | 97 | 86 |
| Comparative example 3 | 94 | 64 | 62 |
| Comparative example 4 | 92 | 68 | 65 |
| Comparative example 5 | 93 | 72 | 66 |
| Example 6 | 92 | 83 | 70 |
| Example 7 | 93 | 78 | 76 |
| Comparative example 8 | 93 | 74 | 69 |
| Comparative Example 1 | 93 | 30 | 14 |

As can be seen from the test results in Table 1, through the design of the composition, compatibilizer, toughening agent, and processing technology, without affecting the flexural strength of the polycarbonate/ABS, the room-temperature toughness and the low-temperature toughness of the polycarbonate/ABS are greatly improved. The polycarbonate/ABS compositions in Examples 1, 2, 6, 7 and in comparative examples 3 to 5 and 8 show excellent notch impact performance at room and low temperatures, especially at low temperature. The impact performance at room temperature can generally reach greater than or equal to 64 KJ/m², the highest can reach 97 KJ/m², and the impact performance at low temperature can generally reach greater than or equal to 62 KJ/m².

## Claims

1. A polycarbonate/acrylonitrile butadiene styrene (ABS) composition, wherein based on the total weight of the composition taken as 100 parts, the composition comprises the following components, in parts by weight:
| | |
|---|---|
| polycarbonate | 50 to 80 parts |
| ABS | 10 to 40 parts |
| compatibilizer | 1 to 10 parts |
| toughening agent | 1 to 10 parts |
| antioxidant | 0.1 to 1 part |
| light stabilizer | 0.1 to 1 part |
| ultraviolet absorber | 0.1 to 1 part |
| heat stabilizer | 0.1 to 1 part |
| lubricant | 0.1 to 1 part; |
wherein the compatibilizer is ethylene-propylene-octylene maleic anhydride copolymer;
the impact strength of the polycarbonate/acrylonitrile butadiene styrene (ABS) composition is greater than or equal to 62 kJ/m², said impact strength being measured according to Charpy notch impact test standard DIN EN ISO 179-1/1eA with a spline size of 80* 10*4, a notch type of Class A, a pendulum of 4 J, and a testing temperature of -35°C.

2. The polycarbonate/ABS composition according to claim 1, wherein, based on the total weight of the ABS taken as 100%, the ABS comprises the following components, in percentage by mass: 30% to 50% of styrene, 30% to 70% of butadiene, and 10% to 40% of acrylonitrile.

3. The polycarbonate/ABS composition according to any one of claims 1 to 2, wherein the toughening agent is olefin block copolymer, methyl methacrylate/butadiene/styrene copolymer, methyl methacrylate/acrylic polymer, acrylic toughening agent, acrylic-silicone rubber toughening agent, ethylene-methyl acrylate, ethylene-butyl acrylate, ethylene-acrylate-glycidyl methacrylate terpolymer or ethylene-vinyl acetate copolymer-functionalized maleic anhydride;
optionally, the antioxidant is any one or a combination of more than two of tris(2,4-di-tert-butylphenyl)phosphite, pentaerythritol tetrakis[β-(3,5-di-tert-butyl-4-hydroxyphenyl)propionate], N,N'-bis[3-(3,5-di-tert-butyl-4-hydroxyphenyl)propionyl] hexamethylenediamine, bis(2,4-di-tert-butylphenyl)pentaerythritol diphosphite, n-octadecyl-β-(3,5-di-tert-butyl-4-hydroxyphenyl)propionate, tris(2,4-di-tert-butyl)phosphite, hindered phenol octadecyl-(3,5-di-butyl-4-hydroxyphenyl)propionate, 1,3,5-tris(3,5-di-tert-butyl,4-hydroxybenzyl)-s-triazine, 2,4,6-(1H,3H,5H)-trione, N,N'-bis(3-(3,5-di-tert-butyl-4-hydroxyphenyl)propionyl) hexamethylenediamine, triethylene glycol bis[β-(3-tert-butyl-4-hydroxy-5-methylphenyl)propionate], or distearyl pentaerythritol diphosphite;
optionally, the light stabilizer is any one or a combination of two or more of 4-benzoyloxy-2,2,6,6-tetramethylpiperidine, bis(1,2,2,6,6-pentamethyl-4-piperidinyl)sebacate, 2,2,6,6-tetra-methylpiperidine benzoate, a polymer of butanedioic acid and 4-hydroxy-2,2,6,6-tetramethyl-1-piperidineethanol, bis(2,2,6,6-tetramethyl-4-piperidinyl) sebacate, or poly{[6-[(1,1,3,3-tetramethylbutyl)imino]-1,3,5-triazin-2,4-diyl][2-(2,2,6,6-tetramethylpiperidinyl)-nitrilo]-hexamethylene-[4-(2,2,6,6-tetramethylpiperidinyl)-nitrilo]; and
optionally, the ultraviolet absorber is any one or a combination of more than two of 2,4-dihydroxybenzophenone, 2-hydroxy-4-methoxybenzophenone, 2-hydroxy-4-n-octyloxybenzophenone, 2-(2-hydroxy-5-methyl-phenyl)benzotriazole, 2-(2'-hydroxy-3',5'-bis(α,α-dimethylbenzyl)phenyl)benzotriazole, 2-(2-hydroxy-3-tert-butyl-5-methylphenyl)-5-chlorobenzotriazole, 2-(2'-hydroxy-3',5'-di-tert-phenyl)-5-chlorobenzotriazole, 2-(2-hydroxy-3,5-di-tert-pentylphenyl)benzotriazole, 2-(2'-hydroxy-4'-benzoyloxyphenyl)-5-chloro-2H-benzotriazole, resorcinol monobenzoate, 2-(4,6-bis(2,4-dimethylphenyl)-1,3,5-triazin-2-yl)-5-octyloxyphenol, 2,4,6-tris(2'-butoxyphenyl)-1,3,5-triazine, 2-(4,6-diphenyl-1,3,5-triazin-2)-5-n-hexyloxyphenol, phenyl salicylate, salicylic acid-4-isopropylbenzyl ester, 2-ethylhexyl salicylate, or hexamethylphosphoric triamide.

4. The polycarbonate/ABS composition according to any one of claims 1 to 3, wherein the heat stabilizer is any one or a combination of two or more of a metal soap, an organotin compound, a phosphite, or a phosphate.

5. The polycarbonate/ABS composition according to any one of claims 1 to 4, wherein the lubricant is any one or a combination of two or more of silane polymer, fatty acid salt, calcium stearate, zinc stearate, stearamide, methylene bis stearamide, ethylene bis oleamide, N,N-ethylene-bis-stearamide, glycerol monostearate, pentaerythritol stearate, or a montan wax.

6. The polycarbonate/ABS composition according to any one of claims 1 to 5, wherein the polycarbonate is an aromatic polycarbonate.

7. A preparation method for the polycarbonate/ABS composition according to any one of claims 1 to 6, comprising the following steps:
(1) mixing a polycarbonate and ABS as well as a compatibilizer, a toughening agent, an antioxidant, a light stabilizer, an ultraviolet absorber, a heat stabilizer, and a lubricant to obtain a mixture; and
(2) blending and pelletizing the mixture obtained in step (1) by a twin-screw extruder, and performing melt extrusion to obtain the polycarbonate/ABS composition.

8. The preparation method according to claim 7, wherein an optional rotational speed of the twin-screw extruder in step (2) is 300 rpm/min to 1000 rpm/min; and
optionally, a melt extrusion temperature of the twin-screw extruder in step (2) is 210°C to 280°C.

9. An automobile pillar protective panel, comprising the polycarbonate/ABS composition according to any one of claims 1 to 6.

## Patentansprüche

1. Polycarbonat-/Acrylnitril-Butadien-Styrol(ABS)-Zusammensetzung, wobei die Zusammensetzung basierend auf dem als 100 Teile angenommenen Gesamtgewicht der Zusammensetzung die folgenden Bestandteile in Gewichtsteilen umfasst:
| | |
|---|---|
| Polycarbonat | 50 bis 80 Teile |
| ABS | 10 bis 40 Teile |
| Kompatibilisierungsmittel | 1 bis 10 Teile |
| Schlagzähmodifikator | 1 bis 10 Teile |
| Antioxidationsmitte | 0,1 bis 1 Teil |
| Lichtstabilisator | 0,1 bis 1 Teil |
| Ultraviolettabsorber | 0,1 bis 1 Teil |
| Wärmestabilisator | 0,1 bis 1 Teil |
| Gleitmittel | 0,1 bis 1 Teil, |
wobei das Kompatibilisierungsmittel ein Ethylen-Propylen-Octylen-Maleinsäureanhydrid-Copolymer ist,
wobei die Schlagzähigkeit der Polycarbonat-/Acrylnitril-Butadien-Styrol(ABS)-Zusammensetzung größer als oder gleich 62 kJ/m² ist, wobei die Schlagzähigkeit gemäß der Charpy-Kerbschlagbiegeversuch nach DIN EN ISO 179-1/1eA mit einer Probekörpergröße von 80 × 10 × 4, einem Kerbtyp der Klasse A, einem Pendel von 4 J und einer Prüftemperatur von -35 °C gemessen wird.

2. Polycarbonat-/ABS-Zusammensetzung nach Anspruch 1, wobei das ABS basierend auf dem als 100 % angenommenen Gesamtgewicht des ABS die folgenden Bestandteile in Massenprozent umfasst: 30 % bis 50 % Styrol, 30 % bis 70 % Butadien und 10 % bis 40 % Acrylnitril.

3. Polycarbonat-/ABS-Zusammensetzung nach einem der Ansprüche 1 bis 2, wobei der Schlagzähmodifikator ein Olefin-Blockcopolymer, Methylmethacrylat/Butadien/Styrol-Copolymer, Methylmethacrylat/Acrylpolymer, ein Acryl-Schlagzähmodifikator, ein Acryl-Silikonkautschuk-Schlagzähmodifikator, Ethylen-Methylacrylat, Ethylen-Butylacrylat, Ethylen-Acrylat-Glycidylmethacrylat-Terpolymer oder mit Maleinsäureanhydrid funktionalisiertes Ethylen-Vinylacetat-Copolymer ist,
wobei das Antioxidationsmittel optional ein Tris(2,4-di-tert-butylphenyl)phosphit, Pentaerythritoltetrakis[β-(3,5-di-tert-butyl-4-hydroxyphenyl)propionat], N,N'-Bis[3-(3,5-di-tert-butyl-4-hydroxyphenyl)propionyl]hexamethylendiamin, Bis(2,4-di-tert-butylphenyl)pentaerythritoldiphosphit, n-Octadecyl-β-(3,5-di-tert-butyl-4-hydroxyphenyl)propionat, Tris(2,4-di-tert-butyl)phosphit, sterisch gehindertes Phenol Octadecyl-(3,5-di-butyl-4-hydroxyphenyl)propionat, 1,3,5-Tris(3,5-di-tert-butyl-4-hydroxybenzyl)-s-triazin, 2,4,6-(1H,3H,5H)-Trion, N,N'-Bis(3-(3,5-di-tert-butyl-4-hydroxyphenyl)propionyl)hexamethylendiamin, Triethylenglykol-bis[β-(3-tert-butyl-4-hydroxy-5-methylphenyl)propionat] oder Distearylpentaerythritoldiphosphit oder eine Kombination von mehr als zwei davon ist,
wobei der Lichtstabilisator optional ein 4-Benzoyloxy-2,2,6,6-tetramethylpiperidin, Bis(1,2,2,6,6-pentamethyl-4-piperidinyl)sebacat, 2,2,6,6-Tetramethylpiperidinbenzoat, ein Polymer aus Butandisäure und 4-Hydroxy-2,2,6,6-tetramethyl-1-piperidinethanol, Bis(2,2,6,6-tetramethyl-4-piperidinyl)sebacat oder Poly{[6-[(1,1,3,3-tetramethylbutyl)imino]-1,3,5-triazin-2,4-diyl][2-(2,2,6,6-tetramethylpiperidinyl)-nitrilo]-hexamethylen-[4-(2,2,6,6-tetramethylpiperidinyl)-nitrilo]} oder eine Kombination von zwei oder mehr davon ist und
der Ultraviolettabsorber optional ein 2,4-Dihydroxybenzophenon, 2-Hydroxy-4-methoxybenzophenon, 2-Hydroxy-4-n-octyloxybenzophenon, 2-(2-Hydroxy-5-methylphenyl)benzotriazol, 2-(2'-Hydroxy-3',5'-bis(α,α-dimethylbenzyl)phenyl)benzotriazol, 2-(2-Hydroxy-3-tert-butyl-5-methylphenyl)-5-chlorbenzotriazol, 2-(2'-Hydroxy-3',5'-di-tert-phenyl)-5-chlorbenzotriazol, 2-(2-Hydroxy-3,5-di-tert-pentylphenyl)benzotriazol, 2-(2'-Hydroxy-4'-benzoyloxyphenyl)-5-chlor-2H-benzotriazol, Resorcinmonobenzoat, 2-(4,6-Bis(2,4-dimethylphenyl)-1,3,5-triazin-2-yl)-5-octyloxyphenol, 2,4,6-Tris(2'-butoxyphenyl)-1,3,5-triazin, 2-(4,6-Diphenyl-1,3,5-triazin-2)-5-n-hexyloxyphenol, Phenylsalicylat, Salicylsäure-4-isopropylbenzylester, 2-Ethylhexylsalicylat oder Hexamethylphosphorsäuretriamid oder eine Kombination von mehr als zwei davon ist.

4. Polycarbonat-/ABS-Zusammensetzung nach einem der Ansprüche 1 bis 3, wobei der Wärmestabilisator eine Metallseife, eine Organozinnverbindung, ein Phosphit oder ein Phosphat oder eine Kombination von zwei oder mehr davon ist.

5. Polycarbonat-/ABS-Zusammensetzung nach einem der Ansprüche 1 bis 4, wobei das Gleitmittel ein Silanpolymer, ein Fettsäuresalz, Calciumstearat, Zinkstearat, Stearamid, Methylenbisstearamid, Ethylenbisoleamid, N,N-Ethylenbisstearamid, Glycerinmonostearat, Pentaerythritolstearat oder ein Montanwachs oder eine Kombination von zwei oder mehr davon ist.

6. Polycarbonat-/ABS-Zusammensetzung nach einem der Ansprüche 1 bis 5, wobei das Polycarbonat ein aromatisches Polycarbonat ist.

7. Verfahren zur Herstellung der Polycarbonat-/ABS-Zusammensetzung nach einem der Ansprüche 1 bis 6, umfassend die folgenden Schritte:
(1) Mischen eines Polycarbonats und ABS sowie eines Kompatibilisierungsmittels, eines Schlagzähmodifikators, eines Antioxidationsmittels, eines Lichtstabilisators, eines Ultraviolettabsorbers, eines Wärmestabilisators und eines Gleitmittels, um eine Mischung zu erhalten;
(2) Vermengen und Pelletieren der in Schritt (1) erhaltenen Mischung durch einen Doppelschneckenextruder sowie Durchführen einer Schmelzextrusion zum Erhalten der Polycarbonat-/ABS-Zusammensetzung.

8. Herstellungsverfahren nach Anspruch 7, wobei eine optionale Drehzahl des Doppelschneckenextruders in Schritt (2) 300 U/min bis 1000 U/min beträgt und
eine Schmelzextrusionstemperatur des Doppelschneckenextruders in Schritt (2) optional 210 °C bis 280 °C beträgt.

9. Säulenschutzverkleidung für ein Kraftfahrzeug, umfassend die Polycarbonat-/ABS-Zusammensetzung nach einem der Ansprüche 1 bis 6.

## Revendications

1. Composition de polycarbonate/acrylonitrile butadiène styrène (ABS), dans laquelle, sur la base du poids total de la composition considéré comme étant 100 parties, la composition comprend les composants suivants, en parties en poids :
| | |
|---|---|
| polycarbonate | 50 à 80 parties |
| ABS | 10 à 40 parties |
| agent de compatibilité | 1 à 10 parties |
| agent d'augmentation de la résistance au choc | 1 à 10 parties |
| antioxydant | 0,1 à 1 partie |
| stabilisant de lumière | 0,1 à 1 partie |
| absorbeur de lumière UV | 0,1 à 1 partie |
| stabilisant thermique | 0,1 à 1 partie |
| lubrifiant | 0,1 à 1 partie ; |
dans laquelle l'agent de compatibilité est un copolymère d'anhydride maléique d'éthylène-propylène-octylène ;
la résistance au choc de la composition de polycarbonate/acrylonitrile butadiène styrène (ABS) est supérieure ou égale à 62 kJ/m², ladite résistance au choc étant mesurée selon l'essai de résistance au choc Charpy d'éprouvettes entaillées selon la norme DIN EN ISO 179-1/1eA avec une taille de cannelure de 80*10*4, un type d'entaille de Classe A, un pendule de 4 J, et une température d'essai de -35°C.

2. Composition de polycarbonate/ABS selon la revendication 1, dans laquelle, sur la base du poids total de l'ABS considéré comme étant 100 %, l'ABS comprend les composants suivants, en pourcentage en masse : 30 % à 50 % de styrène, 30 % à 70 % de butadiène, et 10 % à 40 % d'acrylonitrile.

3. Composition de polycarbonate/ABS selon l'une quelconque des revendications 1 à 2, dans laquelle l'agent d'augmentation de la résistance au choc est un copolymère séquencé d'oléfine, un copolymère de méthacrylate de méthyle/butadiène/styrène, un méthacrylate de méthyle/polymère acrylique, un agent d'augmentation de la résistance au choc acrylique, un agent d'augmentation de la résistance au choc de caoutchouc acrylique-silicone, un éthylène-acrylate de méthyle, un éthylène-acrylate de butyle, un terpolymère d'éthylène-acrylate-méthacrylate de glycidyle ou un anhydride maléique fonctionnalisé par un copolymère d'éthylène-acétate de vinyle ;
optionnellement, l'antioxydant est l'un quelconque ou une combinaison de plus de deux parmi le tris(2,4-di-tert-butylphényl)phosphite, le pentaérythritol tétrakis[β-(3,5-di-tert-butyl-4-hydroxyphényl)propionate], la N,N'-bis[3-(3,5-di-tert-butyl-4-hydroxyphényl)propionyl] hexaméthylènediamine, le bis (2,4-di-tert-butylphényl)pentaérythritol diphosphite, le n-octadécyl-β-(3,5-di-tert-butyl-4-hydroxyphényl)propionate, le tris(2,4-di-tert-butyl)phosphite, le phénol octadécyl-(3,5-di-butyl-4-hydroxy-phényl)propionate encombré, la 1,3,5-tris(3,5-di-tert-butyle,4-hydroxybenzyl)-s-triazine, la 2,4,6-(1H,3H,5H)-trione, la N,N'-bis(3-(3,5-di-tert-butyl-4-hydroxyphényl)propionyl) hexaméthylènediamine, le triéthylène glycol bis[β-(3-tert-butyl-4-hydroxy-5-méthylphényl)propionate], ou le diphosphite de distéaryl pentaérythritol ;
optionnellement, le stabilisant de lumière est l'un quelconque ou une combinaison de deux ou plus parmi la 4-benzoyloxy-2,2,6,6-tétraméthylpipéridine, le bis(1,2,2,6,6-pentaméthyl-4-pipéridinyl)sébacate, le 2,2,6,6-tétra-méthylpipéridine benzoate, un polymère d'acide butanedioïque et le 4-hydroxy-2,2,6,6-tétraméthyl-1-pipéridineéthanol, le bis(2,2,6,6-tétraméthyl-4-pipéridinyl)sébacate, ou le poly{[6-[(1,1,3,3-tétraméthylbutyl)imino]-1,3,5-triazin-2,4-diyl][2-(2,2,6,6-tétraméthylpipéridinyl)-nitrilo]-hexaméthylène-[4-(2,2,6,6-tétraméthylpipéridinyl)-nitrilo] ; et
optionnellement, l'absorbeur de lumière UV est l'un quelconque ou une combinaison de plus de deux parmi la 2,4-dihydroxybenzophénone, la 2-hydroxy-4-méthoxybenzophénone, la 2-hydroxy-4-n-octyloxybenzophénone, le 2-(2-hydroxy-5-méthyl-phényl)benzotriazole, le 2-(2'-hydroxy-3',5'-bis(α,α-diméthylbenzyl)phényl)benzotriazole, le 2-(2-hydroxy-3-tert-butyl-5-méthylphényl)-5-chlorobenzotriazole, le 2-(2'-hydroxy-3',5'-di-tert-phényl)-5-chlorobenzotriazole, le 2-(2-hydroxy-3,5-di-tert-pentylphényl)benzotriazole, le 2-(2'-hydroxy-4'-benzoyloxyphényl)-5-chloro-2H-benzotriazole, le monobenzoate de résorcinol, le 2-(4,6-bis(2,4-diméthylphényl)-1,3,5-triazin-2-yl)-5-octyloxyphénol, la 2,4,6-tris(2'-butoxyphényl)-1,3,5-triazine, le 2-(4,6-diphényl-1,3,5-triazin-2)-5-n-hexyloxyphénol, le salicylate de phényle, l'ester d'acide salicylique-4-isopropylbenzyle, le salicylate de 2-éthylhexyle, ou le triamide hexaméthylphosphorique.

4. Composition de polycarbonate/ABS selon l'une quelconque des revendications 1 à 3, dans laquelle le stabilisant thermique est l'un quelconque ou une combinaison de deux ou plus parmi un savon métallique, un composé organostannique, un phosphite ou un phosphate.

5. Composition de polycarbonate/ABS selon l'une quelconque des revendications 1 à 4, dans laquelle le lubrifiant est l'un quelconque ou une combinaison de deux ou plus parmi un polymère de silane, un sel d'acide gras, un stéarate de calcium, un stéarate de zinc, un stéaramide, un méthylène bis stéaramide, un éthylène bis oléamide, un N,N-éthylène-bis-stéaramide, un monostéarate de glycérol, un stéarate de pentaérythritol, ou une cire de montan.

6. Composition de polycarbonate/ABS selon l'une quelconque des revendications 1 à 5, dans laquelle le polycarbonate est un polycarbonate aromatique.

7. Procédé de préparation de la composition de polycarbonate/ABS selon l'une quelconque des revendications 1 à 6, comprenant les étapes suivantes :
(1) le mélange d'un polycarbonate et d'ABS ainsi qu'un agent de compatibilité, un agent d'augmentation de la résistance au choc, un antioxydant, un stabilisant de lumière, un absorbeur de lumière UV, un stabilisant thermique et un lubrifiant pour obtenir un mélange ; et
(2) le malaxage et la granulation du mélange obtenu à l'étape (1) par une extrudeuse à double vis, et la réalisation d'une extrusion à l'état fondu pour obtenir la composition de polycarbonate/ABS.

8. Procédé de préparation selon la revendication 7, dans lequel une vitesse de rotation optionnelle de l'extrudeuse à double vis à l'étape (2) va de 300 tr/min à 1000 tr/min ; et
optionnellement, une température d'extrusion à l'état fondu de l'extrudeuse à double vis à l'étape (2) va de 210°C à 280°C.

9. Panneau de protection de montant d'automobile, comprenant la composition de polycarbonate/ABS selon l'une quelconque des revendications 1 à 6.
